# EUROPÄISCHE PATENTSCHRIFT

(11) **EP 2 388 493 B1**
(45) Veröffentlichungstag und Bekanntmachung des Hinweises auf die Patenterteilung: **26.06.2019**
(21) Anmeldenummer: 11165684.9
(22) Anmeldetag: 11.05.2011
(51) Int. Cl.: F16F 9/46

(54) **Dämpfer**
Damper
Amortisseur

(30) Priorität: 20.05.2010 DE 102010029180
(43) Veröffentlichungstag der Anmeldung: 23.11.2011
(73) Patentinhaber: SUSPA GmbH, 90518 Altdorf (DE)
(72) Erfinder: Krog, Andreas, 90610 Winkelhaid (DE); Löscher, Roland, 91058 Tennenlohe (DE); Strobel, Andreas, 91227 Leinburg-Gersdorf (DE); Böhrer, Andreas, 92318 Neumarkt (DE)
(74) Vertreter: Rau, Schneck & Hübner Patentanwälte Rechtsanwälte PartGmbB

(56) Entgegenhaltungen:
- EP-A2- 0 545 687
- EP-A2- 2 103 836
- DE-A1- 3 240 984
- DE-A1- 3 321 680
- DE-A1- 3 434 566
- DE-A1- 3 925 470
- DE-A1-102006 047 093

## Beschreibung

Die Erfindung betrifft einen Dämpfer, insbesondere einen Hydraulikdämpfer.

Hydraulikdämpfer sind beispielsweise aus der DE 10 2005 023 756 A1, der DE 33 21 680 A1 und der DE 10 2006 047 093 A1, welche einen Dämpfer mit den Merkmalen des Oberbegriffs des Anspruchs 1 zeigt, bekannt.

Hierbei kann die Kraft-Geschwindigkeits-Kennlinie über eine Verstellsystematik anpassbar sein.

Der Erfindung liegt die Aufgabe zugrunde, einen Dämpfer mit einer anpassbaren Kraft-Geschwindigkeits-Kennlinie zu verbessern.

Diese Aufgabe wird durch die Merkmale des Anspruchs 1 gelöst. Der Kern der Erfindung besteht darin, im Dämpfer mindestens einen Durchströmkanal mit einem verstellbaren effektiven Strömungs-Querschnitt auszubilden. Da die Dämpfungskraft-Kennlinie von eben diesem Strömungs-Querschnitt abhängt, ist sie somit auf besonders einfache Weise anpassbar.

An einem Ende des Arbeitsraums des Dämpfers ist ein Ringspalt-Ventil vorgesehen. Dieses weist einen Ventil-Ring auf, welcher reibschlüssig und verschiebbar sowie insbesondere abgedichtet auf der Kolbenstange angeordnet ist. Das Ringspalt-Ventil ist somit durch Verschieben der Kolbenstange in Richtung der Mittel-Längs-Achse betätigbar. Bei Druck auf die Kolbenstange in Richtung der Mittel-Längs-Achse öffnet das Ringspalt-Ventil automatisch. Andererseits wird der Ventil-Ring bei Zug auf die Kolbenstange von dieser mitgenommen und gegen den Ventilsitz gedrückt, wodurch das Ringspalt-Ventil schließt und somit ein weiteres Überströmen von Dämpfungsfluid aus dem Arbeitsraum in den Ausgleichsraum verhindert. Durch das Zusammenwirken der Verstell-Einrichtung sowie der Ventile in den Ausgleichskanälen wird eine je nach Bedarf uni- oder bidirektionale Blockierbarkeit des Dämpfers ermöglicht. Hierzu können die Ventile insbesondere derart in den Ausgleichskanälen angeordnet sein, dass bei einer Verschiebung des Kolbens jeweils eines öffnet, während das jeweils andere schließt.

Der Durchströmkanal mit verstellbarem Strömungs-Querschnitt ist insbesondere im Inneren der Kolbenstange angeordnet. Dies führt einerseits zu einem einfach herzustellenden Aufbau des Dämpfers sowie andererseits zu einer besonders robusten Ausführungsform.

Vorzugsweise ist auch das Verstell-Element zumindest teilweise, insbesondere vollständig, in der Kolbenstange angeordnet. Dies führt ebenfalls zu einer besonders robusten Ausführungsform des Dämpfers. Prinzipiell wird es dadurch auch ermöglicht, bereits vorhandene Dämpfer durch Austausch der Kolbenstange mit einer Verstell-Einrichtung, insbesondere mit einer Blockierfunktion, zu versehen.

Der Durchströmkanal kann mittels des Verstell-Elements vollständig verschließbar sein. Hierdurch kann eine Blockierbarkeit, das heißt eine Verriegelung, des Dämpfers erreicht werden.

Das Verstell-Element ist vorzugsweise durch Verdrehen betätigbar. Dies ermöglicht eine besonders einfach auszuübende Verstellbarkeit des Dämpfers. Alternativ hierzu kann das Verstell-Element auch durch Verschieben in Richtung der Mittel-Längs-Achse betätigbar sein. Allgemein ist das Verstell-Element mechanisch durch eine Verlagerung bezüglich der Mittel-Längs-Achse betätigbar.

Weiterhin kann vorgesehen sein, dass der Dämpfer in einem oder beiden der Ausgleichskanäle zwischen dem Arbeitsraums und dem Ausgleichsraum Ventile aufweist. Hierbei handelt es sich vorzugsweise um selbsttätige Ventile. Bei den Ventilen handelt es sich insbesondere um Einweg-Ventile. Sie können einen Überlast-Schutz aufweisen. Durch gezielte Auswahl und Anordnung der Ventile kann erreicht werden, dass der Dämpfer je nach Bedarf ausschließlich in Zug- oder Druckrichtung oder in beide Richtungen blockierbar ist.

In den Durchström-Verbindungen können Überlast-Schutz-Elemente vorgesehen sein, welche bei Überschreiten einer vorbestimmten Grenzkraft sicherstellen, dass die Durchström-Verbindung öffnet. Dies kann aus sicherheitstechnischen Gründen vorteilhaft sein. Außerdem kann hierdurch eine Beschädigung des Dämpfers vermieden werden.

Die Kolbenstange kann insbesondere eine äußere Hülse und einen inneren Kern aufweisen, welche gegeneinander verlagerbar sind. Der Kern bildet hierbei das Verstell-Element, mittels welchem der effektive StrömungsQuerschnitt im Durchströmkanal in der Kolbenstange verstellbar, insbesondere verschließbar ist.

Weitere Vorteile ergeben sich aus den Unteransprüchen sowie der Beschreibung. Merkmale und Einzelheiten der Erfindung ergeben sich aus der Beschreibung mehrerer Ausführungsbeispiele anhand der Zeichnungen. Es zeigen:
- Fig. 1: einen Längsschnitt durch einen Dämpfer, wobei die Strömungsverhältnisse in den Durchström-Verbindungen bei einer Druckbelastung auf die Kolbenstange schematisch dargestellt sind,
- Fig. 2: eine Ansicht gemäß Fig. 1, wobei die Strömungsverhältnisse in den Durchström-Verbindungen bei Zugbelastung auf die Kolbenstange schematisch dargestellt sind,
- Fig. 3: eine Detail-Darstellung der Kolbenstange des Dämpfers, wobei das Verstell-Element in einer vollständig geöffneten Stellung ist,
- Fig. 4: einen Querschnitt durch die Kolbenstange gemäß Fig. 3 entlang der Linie IV-IV,
- Fig. 5 und 6: Darstellungen der Kolbenstange entsprechend den Fig. 3 und 4, wobei das Verstell-Element in einer Zwischenstellung dargestellt ist,
- Fig. 7 und 8: entsprechende Darstellungen mit dem Verstell-Element in der vollständig geschlossenen Verriegelungsstellung,
- Fig. 9 und 10: Darstellungen entsprechend den Fig. 1 und 2 eines weiteren Dämpfers, und
- Fig. 11 und 12: Ausschnittsvergrößerungen aus den Fig. 9 und 10.

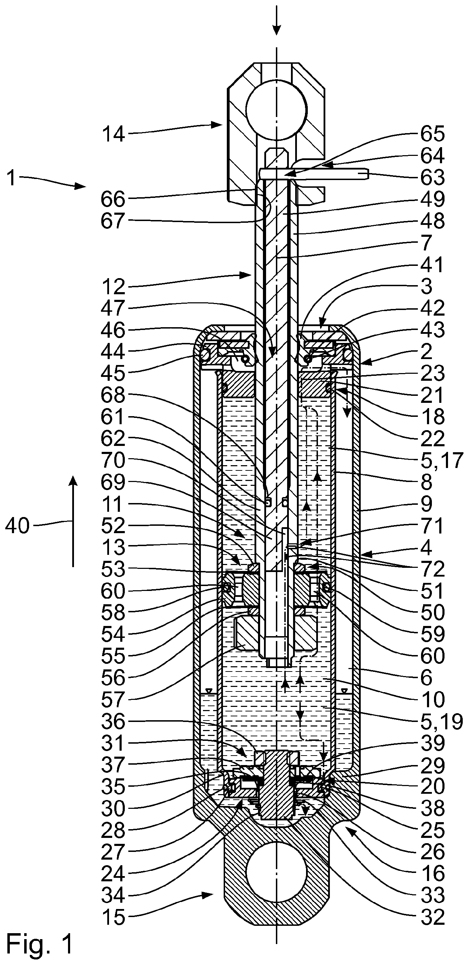

Im Folgenden wird unter Bezugnahme auf die Fig. 1 bis 8 ein nicht unter den Gegenstand der Ansprüche fallendes Ausführungsbeispiel beschrieben. Ein Dämpfer 1 weist ein Gehäuse 4 mit einem ersten Gehäuse-Ende 2 und einem zweiten Gehäuse-Ende 16 auf. Das Gehäuse 4 ist am ersten Gehäuse-Ende 2 durch eine Führungs- und Dichtungs-Einheit 3 abgeschlossen. Am zweiten Gehäuse-Ende 16 weist das Gehäuse 4 ein zweites Befestigungs-Element 15 auf. Das Gehäuse 4 umschließt einen Arbeitsraum 5 und einen Ausgleichsraum 6. Das Gehäuse 4 weist eine Mittel-Längs-Achse 7 auf. Es ist insbesondere zumindest abschnittsweise rotationssymmetrisch zur Mittel-Längs-Achse 7 ausgebildet. Das Gehäuse 4 kann doppelwandig ausgebildet sein. Es umfasst insbesondere ein inneres Gehäuse 8 und ein äußeres Gehäuse 9. Das äußere Gehäuse 9 umgibt das innere Gehäuse 8. Das äußere Gehäuse 9 kann insbesondere konzentrisch zum inneren Gehäuse 8 angeordnet sein. Der Ausgleichsraum 6 ist somit als ringzylinderförmiger Hohlraum ausgebildet.

In einer alternativen, in den Figuren nicht dargestellten Variante, kann das äußere Gehäuse 9 auch derart versetzt zum inneren Gehäuse 8 angeordnet sein, dass der Ausgleichsraum 6 entlang seines Umfangs eine variable, das heißt nicht konstante Breite aufweist. In diesem Fall kann der Ausgleichsraum 6 insbesondere topologisch zusammenziehbar ausgebildet sein.

Der Arbeitstraum 5 ist mit einem Dämpfungsfluid 10 gefüllt. Beim Dämpfungsfluid 10 handelt es sich insbesondere um ein hydraulisches Öl. Der Ausgleichsraum 6 ist teilweise mit dem Dämpfungsfluid 10 gefüllt. Der Rest des Ausgleichsraums 6 ist mit Gas, insbesondere mit Luft gefüllt.

Die Führungs- und Dichtungseinheit 3 umfasst ein erstes Dichtungs-Element 41, welches abgedichtet an der Kolbenstange 12 anliegt. Zur Halterung auf der Kolbenstange 12 weist das erste Dichtungs-Element 41 eine Ringnut 42 auf, in welcher ein Spannring 43 angeordnet ist. Des Weiteren umfasst die Führungs- und Dichtungseinheit 3 ein nach außen gegen das äußere Gehäuse 9 abgestütztes Stütz-Element 44. Das Stütz-Element 44 ist mittels eines Dichtungsrings 45 gegen das äußere Gehäuse 9 abgedichtet gelagert. Es weist ein zentrales Sackloch 46 auf. Die Führungs- und Dichtungseinheit 3 weist eine zentrale Bohrung 47 auf. Die Bohrung 47 ist insbesondere konzentrisch zur Mittel-Längs-Achse 7 angeordnet. Durch die Bohrung 47 ist die Kolbenstange 12 geführt.

Außerdem umfasst der Dämpfer 1 eine Kolben-Einrichtung 11 mit einer Kolbenstange 12 und einem Kolben 13. Der Kolben 13 ist an der Kolbenstange 12 befestigt und in dem inneren Gehäuse 8 entlang der Mittel-Längs-Achse 7 verschiebbar geführt. Die Kolbenstange 12 ist durch die Führungs- und Dichtungs-Einheit 3 abgedichtet aus dem Gehäuse 4 herausgeführt. An ihrem dem Kolben 13 entgegengesetzten Ende ist die Kolbenstange 12 mit einem ersten Befestigungs-Element 14 verbunden.

Der Kolben 13 unterteilt den Arbeitsraum 5 in einen dem ersten Gehäuse-Ende 2 zugewandten ersten Teil-Arbeitstraum 17 mit einem ersten Arbeitsraum-Ende 18 und einem dem zweiten Gehäuse-Ende 16 zugewandten zweiten Teil-Arbeitsraum 19 mit einem zweiten Arbeitsraum-Ende 20.

Am ersten Arbeitsraum-Ende 18 ist ein erstes Abschluss-Element 21 angeordnet. Das erste Abschluss-Element 21 ist im inneren Gehäuse 8 angeordnet. Das erste Abschluss-Element 21 kann insbesondere in das innere Gehäuse 8 eingesteckt, vorzugsweise eingepresst oder eingeschraubt sein. Es ist gegenüber dem inneren Gehäuse 8 mittels eines Dichtungsrings 22 abgedichtet. Das erste Abschluss-Element 21 ist einteilig mit dem Stütz-Element 44 ausgebildet. Es ist somit ebenfalls ein Bestandteil der Führungs- und Dichtungseinheit 3. Prinzipiell ist es jedoch auch denkbar, das erste Abschluss-Element 21 und das Stütz-Element 44 als separate Teile auszubilden.

Das erste Abschluss-Element weist einen ersten Ausgleichskanal 23 auf, welcher eine in den Figuren durch Pfeile angedeutete Durchström-Verbindung zwischen dem ersten Teil-Arbeitsraum 17 und dem Ausgleichsraum 6 bildet. Für weitere Details bezüglich Ausführungsformen des ersten Abschluss-Elements 21 sei auf die DE 10 2005 023 756 A1 verwiesen.

Am zweiten Arbeitsraum-Ende 20 ist ein zweites Abschluss-Element 24 angeordnet. Das zweite Abschluss-Element 24 ist im inneren Gehäuse 8 angeordnet. Das zweite Abschluss-Element 24 kann insbesondere in das innere Gehäuse 8 eingesteckt, vorzugsweise eingepresst sein. Das zweite Abschluss-Element 24 ist im Bereich des zweiten Arbeitsraum-Endes 20 von einer umlaufenden Sicke 27 im inneren Gehäuse 8 gehalten. Zur Verbesserung des Halts des zweiten Abschluss-Elements 24 kann die Sicke 27 durch einen Spannring 28 verstärkt sein. Außerdem kann das innere Gehäuse 8 im Bereich des zweiten Arbeitsraum-Endes 20, insbesondere im Bereich der Sicke 27, umfangsseitig bereichsweise am äußeren Gehäuse 9 anliegen. Das äußere Gehäuse 9 weist hierfür stufenförmige Verstärkungen 29 auf, an welchen eine Anlageschulter 30 des inneren Gehäuses 8 formschlüssig anliegt.

Das zweite Abschluss-Element 24 ist gegenüber dem inneren Gehäuse 8 mittels eines Dichtungsrings 25 abgedichtet. Es weist einen zweiten Ausgleichskanal 26 auf, welcher eine Durchström-Verbindung zwischen dem zweiten Teil-Arbeitsraum 19 und dem Ausgleichsraum 6 bildet.

Für eine ordnungsgemäße Funktion des Dämpfers 1 sollte der Arbeitsraum 5 stets vollständig mit Dämpfungsfluid 10 gefüllt sein. Dies kann durch eine geeignete Ausbildung und Anordnung des zweiten Ausgleichskanals 26 sowie eine an das Volumen des Arbeitsraums 5 und die Ausbildung des Ausgleichsraums 6 angepasste Menge an Dämpfungsfluid 10 erreicht werden. Der Dämpfer 1 weist insbesondere eine bevorzugte Einbaulage derart auf, dass die Ausschub-Richtung 40 der Richtung der Schwerkraft entgegengesetzt ist. Die ordnungsgemäße Funktion des Dämpfers 1 kann dann bis zu einem Verdrehwinkel von mindestens 77 ° aus der bevorzugten Einbaulage gewährleistet sein.

Im zweiten Ausgleichskanal 26 ist ein Ausgleichs-Ventil 31 vorgesehen. Das Ausgleichs-Ventil 31 umfasst insbesondere einen Ventilstift 32, welcher mittels einer konisch zulaufenden Ventil-Schraubenfeder 33 gegen das zweite Abschluss-Element 24 vorgespannt ist. Die Ventil-Schraubenfeder 33 liegt hierzu an einem Ventilstift-Anschlag 34 an. Der Ventilstift 32 ist in einer Bohrung 35 im zweiten Abschluss-Element 24 geführt. Die Bohrung 35 ist insbesondere konzentrisch zur Mittel-Längs-Achse 7 angeordnet. Außerdem umfasst das Ausgleichs-Ventil 31 eine auf dem Ventilstift 32 angeordnete, mehrkantige Ventil-Mutter 36. Die Ventil-Mutter 36 bildet einen weiteren Anschlag, gegen den eine auf dem Ventilstift 32 angeordnete Distanzscheibe 37 anliegt. An die Distanzscheibe 37 anliegend ist eine Ventil-Tellerfeder 38 und eine Ventilscheibe 39 angeordnet.

Das Ausgleichs-Ventil 31 ist als selbsttätiges Ventil ausgebildet. Es kann als Einweg-Ventil ausgebildet sein. Es ist insbesondere derart ausgebildet, dass es eine Strömung vom Ausgleichsraum 6 durch den zweiten Ausgleichskanal 26 in den zweiten Teil-Arbeitsraum 19 ermöglicht. Mit anderen Worten ist das Ausgleichs-Ventil 31 derartig ausgebildet, dass es bei einer Bewegung des Kolbens 13 in einer Ausschub-Richtung 40 parallel zur Richtung der Mittel-Längs-Achse 7 öffnet.

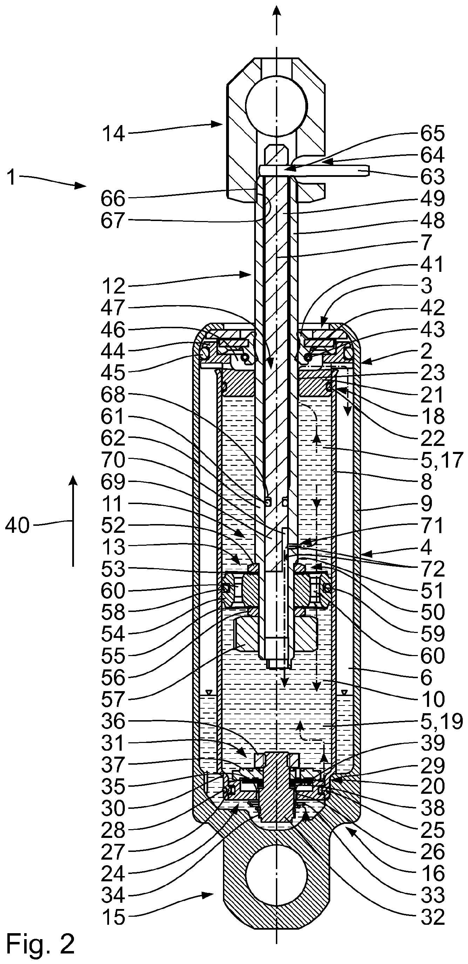

Bei dem in den Fig. 1 und 2 dargestellten Ausführungsbeispiel ist das Ausgleichs-Ventil 31 derart ausgebildet, dass es eine bidirektionale Strömung durch den zweiten Ausgleichskanal 26 ermöglicht. Es ist somit als Zweiweg-Ventil ausgebildet. Das Ausgleichs-Ventil 31 kann insbesondere Prägungen aufweisen, welche unabhängig von der Stellung der Ventilscheibe 39 einem bidirektionalen Durchfluss zwischen dem zweiten Teil-Arbeitsraum 19 und dem Ausgleichsraum 6 ermöglichen.

Allgemein ist vorgesehen, dass das Ausgleichs-Ventil 31 ein Überlast-Schutz-Element bildet, welches bei Überschreiten einer vorbestimmten Grenzkraft in Richtung der Mittel-Längs-Achse 7 auf die Kolbenstange 12 ein Geöffnetsein des zweiten Ausgleichskanals 26 sicherstellt. Die Aktivierungscharakteristik dieses Überlast-Schutzes kann durch geeignete Auswahl und Dimensionierung der Ventil-Schraubenfeder 33 und der Ventil-Tellerfeder 38 auf einfache Weise erreicht werden.

Ein alternativer konstruktiver Aufbau des Ausgleichs-Ventils 31 ist denkbar. Bezüglich weiterer Details des Ausgleichs-Ventils 31 sei auf die DE 10 2005 023 756 A1, insbesondere Abs. [0022], verwiesen.

Die Kolbenstange 12 ist mehrteilig, insbesondere zweiteilig ausgebildet. Sie umfasst eine äußere, rohrförmig ausgebildete Kolbenstangen-Hülse 48 und einen Kolbenstangen-Kern 49.

Die Kolbenstangen-Hülse 48 kann mit dem ersten Befestigungs-Element 14 verbunden sein. Das erste Befestigungs-Element 14 kann hierzu ein Innengewinde 66 aufweisen, mittels welchem das erste Befestigungs-Element 14 auf ein dazu passendes Außengewinde 67 auf der Kolbenstangen-Hülse 48 aufgeschraubt ist.

Der Kolbenstangen-Kern 49 ist mittels eines Dichtungsrings 61 gegen die Kolbenstangen-Hülse 48 abgedichtet. Der Dichtungsring 61 ist in einer ringförmigen Nut 68 am Kolbenstangen-Kern 49 angeordnet. Im Bereich des Dichtungsrings 61 ist die Kolbenstangen-Hülse 48 nach innen, das heißt radial zur Mittel-Längs-Achse 7, verstärkt ausgebildet. Sie weist hier eine Verstärkung 62 auf. Abgesehen von der Nut 68 ist der Kolbenstangen-Kern 49 im Bereich der Verstärkung 62 vollzylindrisch ausgebildet. Im Bereich der Verstärkung 62 liegt der Kolbenstangen-Kern 49 formschlüssig an der Kolbenstangen-Hülse 48 an. Er ist hierdurch in Radialrichtung spielfrei in der Kolbenstangen-Hülse 48 gelagert.

Der Kolbenstangen-Kern 49 weist insbesondere im Bereich der Verstärkung 62 einen kreisförmigen Querschnitt auf. Er ist somit zumindest in diesem Bereich vollzylindrisch ausgebildet.

In einem sich an diesen Bereich gegen die Ausschub-Richtung 40 anschließenden End-Bereich 69 weist der Kolbenstangen-Kern 49 eine Ausnehmung 70 auf. Die Ausnehmung 70 ist in Richtung senkrecht zur Mittel-Längs-Achse 7 kreissegmentförmig ausgebildet. Sie weist einen Mittelpunktswinkel b auf. Der Mittelpunktswinkel b beträgt mindestens 15 °, insbesondere mindestens 30 °, insbesondere mindestens 45 °, insbesondere mindestens 60 °, insbesondere mindestens 90 °. Er kann insbesondere auch 120 ° betragen. Als Obergrenze für den Mittelpunktswinkel b sind höchstens 270 °, insbesondere höchstens 180 °, vorgesehen. Prinzipiell ist auch eine kreissektorförmige Ausbildung der Ausnehmung 70 möglich. Die Ausnehmung kann auch als Bohrung im Kolbenstangen-Kern 49 ausgebildet sein.

Die Ausnehmung 70 ist Teil eines Durchströmkanals 71, welcher eine Durchströmverbindung zwischen den Teil-Arbeitsräumen 17, 19 bildet. Zusätzlich zur Ausnehmung 70 umfasst der Durchströmkanal 71 mehrere Bohrungen 72 in der Kolbenstangen-Hülse 48. Mit anderen Worten bilden die Bohrungen 72 zusammen mit der Ausnehmung 70 den Durchströmkanal 71. Der Durchströmkanal 71 ist somit in der Kolbenstange 12 angeordnet.

Es ist mindestens eine Bohrung 72 in der Kolbenstangen-Hülse 48 vorgesehen. In dem in den Fig. 1 bis 8 dargestellten Ausführungsbeispiel weist die Kolbenstangen-Hülse 48 zwei Bohrungen 72 auf. Sie kann auch drei, vier, fünf oder mehr Bohrungen 72 aufweisen. Die Bohrungen 72 sind jeweils in Umfangsrichtung versetzt zueinander angeordnet. Die Bohrungen 72 weisen alle dieselbe Größe auf. Unterschiedlich große Bohrungen 72 sind jedoch ebenfalls denkbar.

Alternativ zu mehreren, diskreten Bohrungen 72 kann die Kolbenstangen-Hülse 48 auch eine länglich ausgebildete Durchström-Öffnung aufweisen. Die Durchström-Öffnung erstreckt sich vorzugsweise in Umfangsrichtung. Sie überdeckt einen Winkelbereich, welcher höchstens so groß ist wie der Mittelpunktswinkel b der Ausnehmung 70 in dem Kolbenstangen-Kern 49.

Mittels des End-Bereichs 69 des Kolbenstangen-Kerns 49 sind die Bohrungen 72 selektiv verschließbar. Der End-Bereich 69 des Kolbenstangen-Kerns 49 bildet somit ein Verstell-Element, mittels welchem der effektive Strömungs-Querschnitt des Durchströmkanals 71 verstellbar ist. Das Verstell-Element zur Verstellung des effektiven Strömungs-Querschnitts des Durchströmkanals 71 ist somit im Inneren der Kolbenstange 12, insbesondere im Inneren der Kolbenstangen-Hülse 48, angeordnet.

Mittels des Verstell-Elements ist der Durchströmkanal 71 zur Unterbrechung der Durchström-Verbindung zwischen den Teil-Arbeitsräumen 17, 19 insbesondere verschließbar. Hierdurch ist der Dämpfer 1 blockierbar.

Mehrere diskrete Bohrungen 72 ermöglichen mehrere, unterschiedliche, diskrete Dämpfungs-Einstellungen des Dämpfers 1. Der Dämpfer 1 kann somit eine stufenförmige Dämpfungs-Kennlinie aufweisen. Dahingegen ermöglicht eine längliche Öffnung in der Kolbenstangen-Hülse 48 ein kontinuierlich verstellbares Dämpfungs-Verhalten des Dämpfers 1.

Der Kolbenstangen-Kern 49 ist gegen die Kolbenstangen-Hülse 48 verlagerbar, insbesondere verdrehbar. Er ist hierfür mit einem Verstell-Hebel 63 verbunden. Der Verstell-Hebel 63 ist im Bereich des ersten BefestigungsElements 14 mit dem Kolbenstangen-Kern 49 verbunden. Das erste Befestigungs-Element 14 weist hierfür eine Aussparung 64 auf. Der Verstell-hebel 63 ist insbesondere in einer Bohrung 65 im Kolbenstangen-Kern 49 angeordnet. Die Bohrung 65 verläuft senkrecht zur Mittel-Längs-Achse 7. Es kann vorgesehen sein, den Verstell-Hebel 63 mit einem Außengewinde und die Bohrung 65 mit einem dazu passenden Innengewinde zu versehen. Der Verstell-Hebel 63 kann insbesondere in den Kolbenstangen-Kern 49 eingeschraubt sein. Dies ermöglicht eine besonders einfache Montage. Darüber hinaus wird hierdurch eine einfache Austauschbarkeit des Verstell-Hebels 63 sowie des Kolbenstangen-Kerns 49 ermöglicht. Es ist auch denkbar, den Kolbenstangen-Kern 49 gegen die Kolbenstangen-Hülse 48 verschiebbar auszubilden.

Der Verstell-Hebel 63 kann in Richtung der Mittel-Längs-Achse 7 an der Kolbenstangen-Hülse 48 anliegen. Er fixiert somit den Kolbenstangen-Kern 49 gegen ein unbeabsichtigtes Verschieben relativ zur Kolbenstangen-Hülse 48 gegen die Ausschub-Richtung 40. Eine Fixierung des Kolbenstangen-Kerns 49 in der Kolbenstangen-Hülse 48 gegen eine Verschiebung bezüglich der Mittel-Längs-Achse 7 kann auch mit alternativen, separaten Fixierungs-Mitteln erreicht werden.

Die Kolbenstangen-Hülse 48 weist an einem ersten, im inneren Gehäuse 8 angeordneten Kolbenstangen-Ende 50 einen reduzierten Außendurchmesser auf, wodurch ein Kolbenstangen-Anschlag 51 ausgebildet ist. Auf der Kolbenstangen-Hülse 48 sind im Bereich des ersten Kolbenstangen-Endes 50 ausgehend vom Kolbenstangen-Anschlag 51 eine erste Distanzscheibe 52, ein erstes Verschluss-Element 53, insbesondere in Form einer Tellerfeder, eine Kolbenscheibe 54, ein zweites Verschluss-Element 55, insbesondere in Form einer Tellerfeder, eine zweite Distanzscheibe 56 und eine Sicherungsmutter 57 angeordnet. Die Sicherungsmutter 57 ist auf ein Kolbenstangen-Gewinde aufgeschraubt und sichert den Kolben 13 auf der Kolbenstange 12. Der Kolben 13 wird durch das erste Verschluss-Element 53, die Kolbenscheibe 54, das zweite Verschluss-Element 55 und eine Kolben-Dichtung 58 gebildet. Die Kolben-Dichtung 58 ist ringförmig ausgebildet und in einer Ringnut 59 in der Kolbenscheibe 54 angeordnet. Die Kolben-Dichtung 58 dichtet die Kolbenscheibe 54 somit gegen das innere Gehäuse 8 ab.

In der Kolbenscheibe 54 sind mehrere Durchströmkanäle 60 vorgesehen. Die Durchströmkanäle 60 bilden eine Durchström-Verbindung zwischen dem ersten Teil-Arbeitsraum 17 und dem zweiten Teil-Arbeitsraum 19. Die Verschluss-Elemente 53, 55 wirken jeweils mit mindestens einem der Durchströmkanäle 60 zusammen. Sie können auch mit mehreren der Durchströmkanäle 60 zusammenwirken. Sie können insbesondere als Ventil-Element wirken und den effizienten Strömungsquerschnitt der Durchströmkanäle 60 in Abhängigkeit einer Bewegungsrichtung und/oder -geschwindigkeit des Kolbens 13 bezüglich der Ausschub-Richtung 40 beeinflussen. Sie können insbesondere derart ausgebildet sein, dass ausschließlich eine unidirektionale Strömung durch die Durchströmkanäle 60 möglich ist. In diesem Fall bilden die Verschluss-Elemente 53, 55 ein Einweg-ventil. Die Verschluss-Elemente 53, 55 können insbesondere derart ausgebildet sein, dass sie bei Überschreiten einer bestimmten Grenzkraft öffnen. Sie bilden in diesem Fall einen Überlast-Schutz.

Eine alternative Ausführung des Kolbens 13 ist denkbar. Diesbezüglich sowie für weitere Details bezüglich des Durchströmkanals 60 und der Verschluss-Elemente 53, 55 sei auf die Beschreibung der DE 10 2005 023 756 A1, insbesondere Abs. [0023]f., verwiesen. Es ist insbesondere auch möglich, den Kolben 13 dicht, das heißt ohne Durchströmkanäle 60 auszubilden. In diesem Fall sind die Teil-Arbeitsräume 17, 19 fluiddicht durch den Kolben 13 getrennt. Der Durchströmkanal 71 in der Kolbenstange 12 bildet in diesem Fall die einzige direkte Durchström-Verbindung zwischen den Teil-Arbeitsräumen 17, 19.

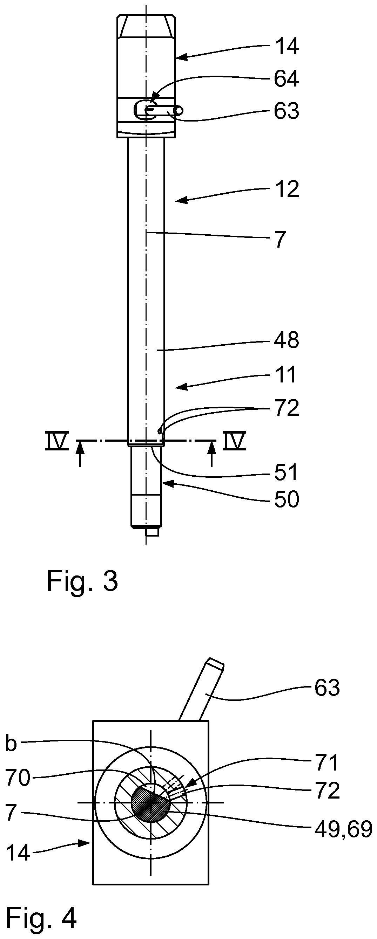

Im Folgenden wird die Verstellbarkeit des effektiven Strömungs-Querschnitts des Durchströmkanals 71 mittels des das Verstell-Element bildenden End-Bereichs 69 des Kolbenstangen-Kerns 49 beschrieben. Das Verstell-Element ist durch eine Verlagerung bezüglich der Mittel-Längs-Achse 7, insbesondere durch Verdrehen betätigbar. Es ist ebenso denkbar, ein durch Verschieben bezüglich der Mittel-Längs-Achse 7 betätigbares Verstell-Element vorzusehen. Das Verstell-Element ist insbesondere mittels des Verstell-Hebels 63 betätigbar. Unterschiedliche Stellungen des Verstell-Elements sind in den Fig. 3 bis 8 dargestellt. In der in den Fig. 3 und 4 dargestellten Verstell-Position deckt der End-Bereich 69 des Kolbenstangen-Kerns 49 keine der Bohrungen 72 ab. Beide Bohrungen 72 tragen somit zum effektiven Strömungs-Querschnitt des Durchströmkanals 71 bei. Der Durchströmkanal 71 weist mit anderen Worten seinen größtmöglichen effektiven Strömungs-Querschnitt auf. Die Dämpfung einer Bewegung der Kolbenstange 12 ist minimal, das heißt der Widerstand gegen eine derartige Bewegung in oder gegen Ausschub-Richtung 40 so klein wie möglich. Der Dämpfer 1 weist in dieser Verstell-Position seine weichest mögliche Dämpfung auf.

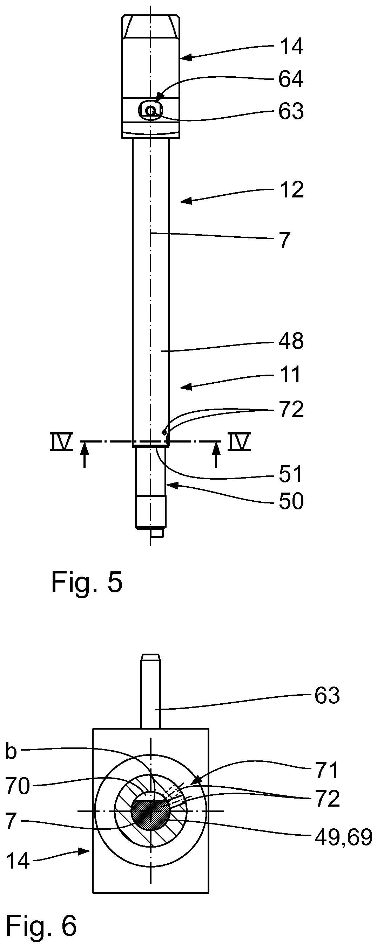

In der in den Fig. 5 und 6 dargestellten Verstellposition deckt der End-Bereich 69 des Kolbenstangen-Kerns 49 eine der Bohrungen 72 ab, während die andere offen bleibt. Hierdurch wird der effektive Strömungs-Querschnitt im Vergleich zu der in den Fig. 3 und 4 dargestellten Verstell-Position auf die Hälfte verringert. Die Dämpfung des Dämpfers 1 ist somit härter.

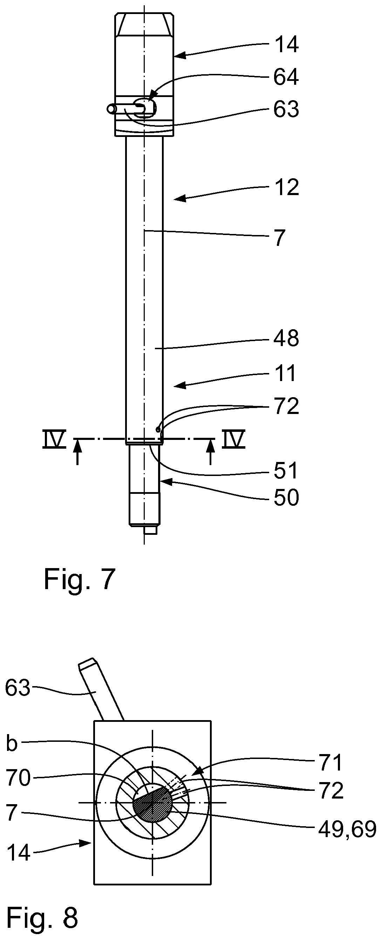

In der in den Fig. 7 und 8 dargestellten Verstell-Position deckt der End-Bereich 69 des Kolbenstangen-Kerns 49 beide, das heißt sämtliche Bohrungen 72 ab. Der Durchströmkanal 71 ist in dieser Stellung verschlossen. Sein effektiver Strömungs-Querschnitt ist Null. Die Durchström-Verbindung zwischen den Teil-Arbeitsräumen 17, 19 durch diesen Durchströmkanal 71 ist unterbrochen. Eine Durchström-Verbindung für das Dämpfungsfluid 10 zwischen den Teil-Arbeitsräumen 17, 19 ist allenfalls über die Ausgleichskanäle 23, 26 und den Ausgleichsraum 6 gegeben. Die Dämpfung einer Bewegung der Kolbenstange 12 ist in dieser Verstell-Position maximal, das heißt der Widerstand gegen eine Bewegung der Kolbenstange 12 in oder gegen Ausschub-Richtung 40 ist so groß wie möglich. Der Dämpfer 1 weist in dieser Verstell-Position seine härtest mögliche Dämpfung auf. Er kann insbesondere blockiert sein.

Im Folgenden wird die Funktion des Dämpfers 1 beschrieben. In der in den Fig. 1 und 2 dargestellten Verstell-Position des Verstell-Elements ist der Durchströmkanal 71 in der Kolbenstange 12 maximal geöffnet. Bei einer Bewegung des Kolbens 13 gegen die Ausschub-Richtung 40 kann das Dämpfungsfluid 10 somit vom zweiten Teil-Arbeitsraum 19 durch den Durchströmkanal 71 in der Kolbenstange 12 in den ersten Teil-Arbeitsraum 17 strömen. Außerdem kann das durch das zusätzliche Volumen der Kolbenstange 12 aus dem Arbeitsraum 5 verdrängte Dämpfungsfluid 10 durch den ersten Ausgleichskanal 23 in den Ausgleichsraum 6 strömen.

Es ist vorgesehen, dass der zweite Ausgleichskanal 26 bei kleinen, gegen die Ausschub-Richtung 40 gerichteten Kräften auf die Kolbenstange 12, insbesondere bei kleinen Geschwindigkeiten des Kolbens 13 gegen die Ausschub-Richtung 40 soweit wie möglich geschlossen ist. Bei einem Ausgleichs-Ventil 31, welches eine bidirektionale Strömung durch den zwetien Ausgleichskanal 26 ermöglicht, ist das Ausgleichs-Ventil 31 nicht vollständig geschlossen. Aufgrund der Prägungen ist stets eine bidirektionale Strömung durch den zweiten Ausgleichskanal 26 möglich. Prinzipiell ist es jedoch auch möglich, das Ausgleichs-Ventil 31 als Einweg-Ventil auszubilden, welches sich bei kleinen, gegen die Ausschub-Richtung 40 gerichteten Kräften auf die Kolbenstange 12 in einer Sperr-Stellung befindet. Das Ansprech-Verhalten des Ausgleichs-Ventils 31 wird durch eine geeignete Auswahl und Einstellung der Ventil-Schraubenfeder 33 und der Ventil-Tellerfeder 38 bestimmt.

Entsprechend kann der Durchströmkanal 60 im Kolben 13 bei kleinen Geschwindigkeiten des Kolbens 13 durch das erste und/oder zweite Verschluss-Element 53, 55 verschlossen sein.

Bei einer Bewegung des Kolbens 13 in Ausschub-Richtung 40 kann das Dämpfungsfluid 10 vom ersten Teil-Arbeitsraum 17 durch den Durchströmkanal 71 in der Kolbenstange 12 in den zweiten Teil-Arbeitsraum 19 strömen. Außerdem öffnet das Ausgleichs-Ventil 31 und ermöglicht ein Durchströmen von Dämpfungsfluid 10 aus dem Ausgleichsraum 6 durch den zweiten Ausgleichskanal 26 in den zweiten Teil-Arbeitsraum 19. Hierdurch wird sichergestellt, dass der Arbeitsraum 5 abgesehen von dem durch die Kolben-Einrichtung 11 verdrängten Volumen stets vollständig mit Dämpfungsfluid 10 gefüllt ist.

Das Ausgleichs-Ventil 31 im zweiten Abschluss-Element 24 und/oder die Verschluss-Elemente 53, 55 im Kolben 13 können derart ausgebildet sein, dass bei einer Bewegung der Kolbenstange 12 in Ausschub-Richtung 40 ein Durchströmen von Dämpfungsfluid 10 durch den zweiten Ausgleichskanal 26 im zweiten Abschluss-Element 24 und/oder den Durchströmkanal 60 im Kolben 13 nur bei einer großen Ausschub-Geschwindigkeit der Kolbenstange 12 oder einer großen Kraft in Ausschub-Richtung 40 auf diese stattfindet.

Der Durchströmkanal 60 im Kolben 13 und/oder das Ausgleichs-Ventil 31 im zweiten Abschluss-Element 24 wirken somit als Überlastschutz, welcher bei großen Geschwindigkeiten und/oder Kräften auf die Kolbenstange 12 auslöst und dadurch eine Beschädigung des Dämpfers 1 verhindert. Selbstverständlich lässt sich das Dämpfungsverhalten des Dämpfers 1 durch geeignete Auswahl der Verschluss-Elemente 53, 55 des Durchströmkanals 60 und/oder der Ventil-Elemente 33, 38 des Ausgleichs-Ventils 31 je nach Bedarf beeinflussen.

Durch ein Verdrehen des Kolbenstangen-Kerns 49 um die Mittel-Längs-Achse 7 mittels des Verstell-Hebels 63 lassen sich die Bohrungen 72 des Durchströmkanals 71 in der Kolbenstange 12 vom End-Bereich 69 des Kolbenstangen-Kerns 49 verschließen. Hierdurch wird der effektive Strömungs-Querschnitt des Durchströmkanals 71 in der Kolbenstange 12 verringert, insbesondere verschlossen, insbesondere vollständig verschlossen. Ein Durchströmen von Dämpfungsfluid 10 aus dem ersten Teil-Arbeitsraum 17 durch den Durchströmkanal 71 in den zweiten Teil-Arbeitsraum 19 oder umgekehrt, ist dann nicht mehr möglich.

Insofern das Ausgleichs-Ventil 31 ein Durchströmen von Dämpfungsfluid 10 aus dem zweiten Teil-Arbeitsraum 19 in den Ausgleichsraum 6 verhindert, ist die Kolbenstange 12 ist in dieser Stellung des durch den Kolbenstangen-Kern 49, insbesondere dessen End-Bereich 69, gebildeten Verstell-Elements aufgrund des vollständig abgeschlossenen Volumens des zweiten Teil-Arbeitsraums 19 gegen eine Verschiebung gegen die Ausschub-Richtung 40 blockiert.

Übersteigt die Kraft auf die Kolbenstange 12 in Richtung gegen die Ausschub-Richtung 40 jedoch eine vorbestimmten Grenzkraft, wird der Überlastschutz aktiviert und der Durchströmkanal 60 im Kolben 13 und/oder der zweite Ausgleichskanal 26 im zweiten Abschluss-Element 24 geöffnet.

Da das Ausgleichs-Ventil 31 im zweiten Abschluss-Element 24 bei einer Bewegung des Kolbens 13 in Ausschub-Richtung 40 öffnet, um ein Durchströmen von Dämpfungsfluid 10 aus dem Ausgleichsraum 6 in den zweiten Teil-Arbeitsraum 19 zu ermöglichen, und der erste Ausgleichskanal 23 im ersten Abschluss-Element 21 ohnehin geöffnet ist, ist der Dämpfer 1 auch im Falle eines verschlossenen Durchströmkanals 71 in der Kolbenstange 12 nicht vollständig gegen eine Bewegung der Kolbenstange 12 in Ausschub-Richtung 40 blockiert. Er weist allerdings eine maximal harte Dämpfung auf, da das Dämpfungsfluid 10 nicht durch den Durchströmkanal 71 in der Kolbenstange 12 vom ersten Teil-Arbeitsraum 17 in den zweiten Teil-Arbeitsraum 19 strömen kann sondern vom ersten Teil-Arbeitsraum 17 durch den ersten Ausgleichskanal 23 in den Ausgleichsraum 6 und vom Ausgleichsraum 6 durch den zweiten Ausgleichskanal 26 in den zweiten Teil-Arbeitsraum 19 strömt. Die Dämpfungscharakteristik wird somit in diesem Fall durch die Ausgleichskanäle 23, 26 sowie insbesondere durch das Ausgleichs-Ventil 31 bestimmt.

In einer alternativen Ausführungsform kann vorgesehen sein, die Verschluss-Elemente 53, 55 derart auszubilden, dass die Durchströmkanäle 60 im Kolben 13 in Abhängigkeit von der Geschwindigkeit der Bewegung der Kolbenstange 12 in Ausschub-Richtung 40 öffnen bzw. schließen. Hierdurch kann eine geschwindigkeits-abhängige Dämpfungs-Kennlinie erreicht werden. Für Details diesbezüglich wird auf die DE 10 2005 023 756 A1, Abs. [0028] ff. verwiesen.

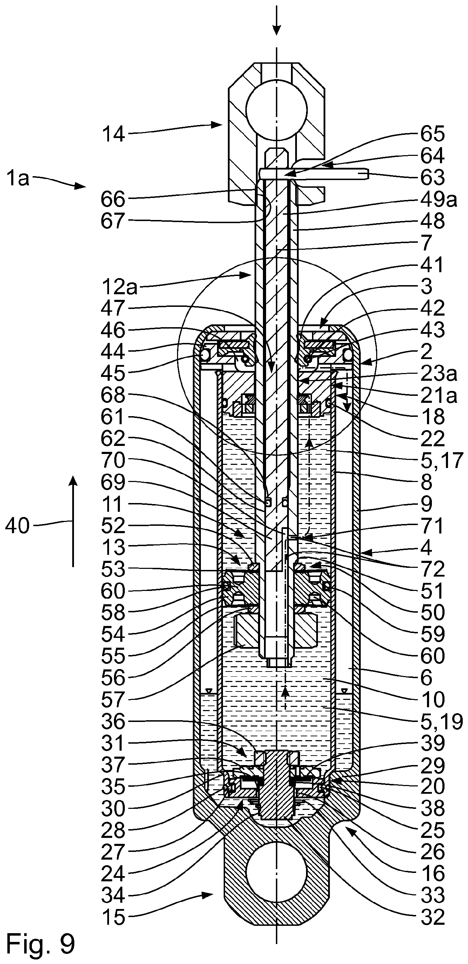

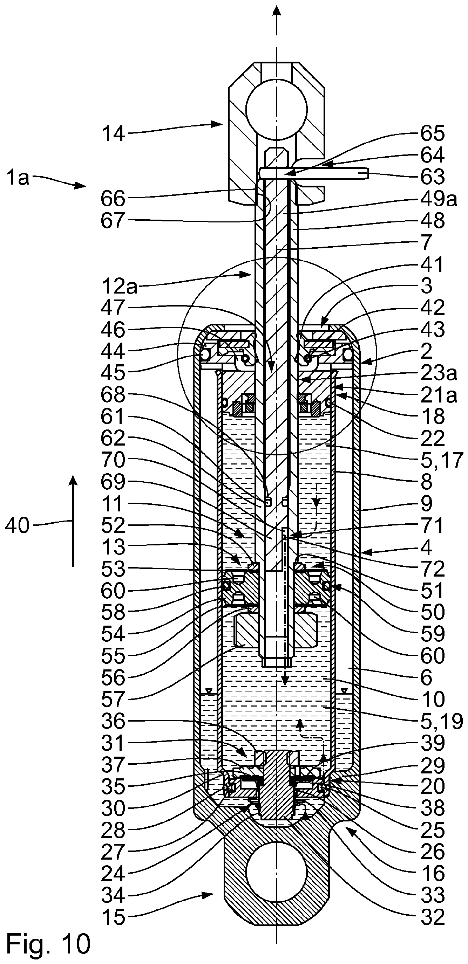

Im Folgenden wird unter Bezugnahme auf die Fig. 9 bis 12 ein Ausführungsbeispiel der Erfindung beschrieben. Identische Teile erhalten dieselben Bezugszeichen wie bei dem vorherigen Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Gemäß diesem Ausführungsbeispiel umfasst das erste Abschluss-Element 21a ein Ringspalt-Ventil 80, welches ein Ausgleichs-Ventil zwischen dem ersten Teil-Arbeitsraum 17 und dem Ausgleichsraum 6 bildet. Das Ringspalt-Ventil 80 umfasst einen Ventil-Körper 73, welcher mittels des Dichtungsrings 22 abgedichtet im inneren Gehäuse 8 angeordnet ist. Zwischen dem Ventil-Körper 73 und der Kolbenstange 12a ist ein erster Ringspalt 76 ausgebildet, welcher ein Teil des ersten Ausgleichskanals 23a ist. Der Ventil-Körper 73 weist eine sich radial zur Mittel-Längs-Achse 7 erstreckende Schulter auf, welche einen Ventil-Sitz 74 bildet.

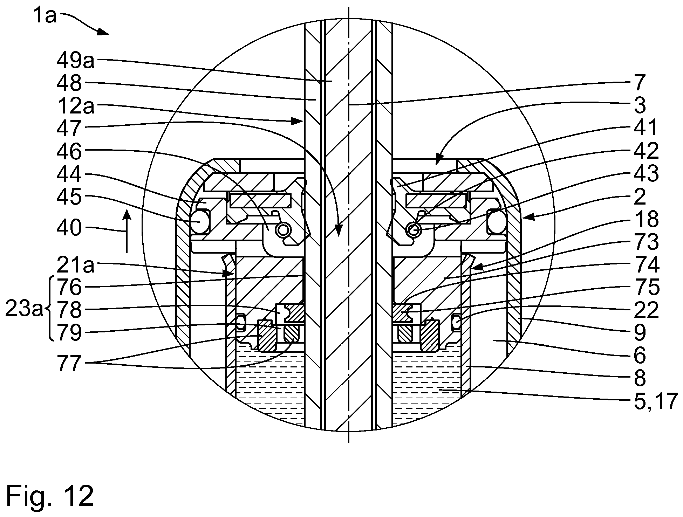

Des Weiteren umfasst das Ringspalt-Ventil 80 einen Ventil-Ring 75. Der Ventil-Ring 75 ist reibschlüssig und verschiebbar sowie insbesondere abgedichtet auf der Kolbenstange 12a angeordnet. In radialer Richtung ist der Ventil-Ring 75 vom Ventil-Körper 73 beabstandet. Hierdurch ist zwischen dem Ventil-Ring 75 und dem Ventil-Körper 73 ein zweiter Ringspalt 78 ausgebildet. Der Ventil-Ring 75 ist durch eine Bewegung der Kolbenstange 12a bezüglich der Ausschub-Richtung 40 relativ zum Ventil-Sitz 74 bewegbar. In einer ersten, in Fig. 12a dargstellten Stellung, welche einer Verschluss-Stellung des Ringspalt-Ventils 80 bildet, liegt der Ventil-Ring 75 abdichtend am Ventil-Sitz 74 an. Er verschließt in dieser Stellung den ersten Ringspalt 76.

Außerdem umfasst das Ringspalt-Ventil 80 ein in den Ventilkörper 73 eingesetztes, insbesondere eingeschraubtes, Anschlag-Element 77, welches die Verschiebbarkeit des Ventil-Rings 75 in Richtung der Mittel-Längs-Achse 7 relativ zum Ventil-Sitz 74 begrenzt. Im Anschlag-Element 77 sind Durchtritts-Öffnungen 79 vorgesehen, welche in Richtung der Mittel-Längs-Achse 7 in Verlängerung des zweiten Ringspalts 78 angeordnet sind.

Bei dieser Ausführungsform bilden der erste Ringspalt 76, der zweite Ringspalt 78 und die Durchtritts-Öffnungen 79 den ersten Ausgleichskanal 23a.

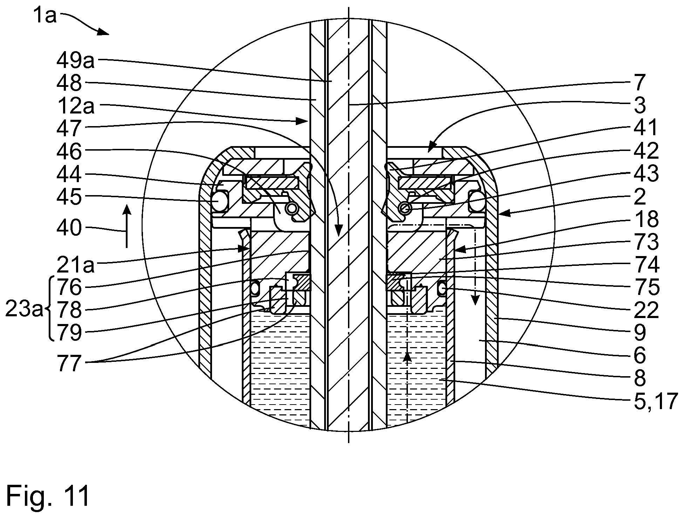

Der erste Ausgleichskanal 23a ist durch Verschieben des Ventil-Rings 75 in Ausschub-Richtung 40 öffen- und verschließbar. Bei einem Einschieben der Kolbenstange 12a gegen die Ausschub-Richtung 40 wird der Ventil-Ring 75 aufgrund der Reibung zwischen der Kolbenstange 12a und dem Ventil-Ring 75 relativ zum Ventil-Körper 73 gegen die Ausschub-Richtung 40 bewegt. Dadurch wird er vom Ventil-Sitz 74 abgehoben und gegen das Anschlag-Element 77 gedrückt. In dieser, in Fig. 11 dargestellten Stellung gibt der Ventil-Ring 75 den ersten Ring-Spalt 76 und damit den ersten Ausgleichskanal 23a frei. Das Ringspalt-Ventil 80 ist somit insbesondere als Einweg-Ventil ausgebildet. Es öffnet bei einer Bewegung der Kolbenstange 12a gegen die Ausschub-Richtung 40 und ermöglicht in dieser Stellung ein Durchströmen von Dämpfungsfluid 10 vom ersten Teil-Arbeitsraum 17 durch den ersten Ausgleichskanal 23a in den Ausgleichs-Raum 6. Andererseits schließt das Ringspalt-Ventil 80 bei einer Bewegung der Kolbentange 12a in Ausschub-Richtung 40. Eine Strömung von Dämpfungsfluid 10 durch den ersten Ausgleichskanal 23a ist dann nicht möglich.

Bei dieser Ausführungsform liegt der Kolbenstangen-Kern 49a im Wesentlichen über seine gesamte Länge formschlüssig an der Kolbenstangen-Hülse 48 an. Er weist an seinem dem ersten Befestigungs-Element 14 zugewandten Ende einen größeren Durchmesser auf als an seinem dem zweiten Gehäuse-Ende 16 zugewandten Ende. Selbstverständlich kann der Kolbenstangen-Kern 49a auch bei diesem Ausführungsbeispiel entsprechend der Ausführung des ersten Ausführungsbeispiels ausgebildet sein.

Im Folgenden wird noch einmal die Funktion des Dämpfers 1a unter Berücksichtigung des Ringspalt-Ventils 80 beschrieben. In einer geöffneten Stellung des Durchströmkanals 71 in der Kolbenstange 12a, in welcher der das Verstell-Element bildende End-Bereich 69 des Kolbenstangen-Kerns 49a die Bohrungen 72 in der Kolbenstangen-Hülse 48 nicht überdeckt, und der Durchströmkanal 71 in der Kolbenstange 12a somit eine Durchström-Verbindung zwischen den Teil-Arbeitsräumen 17, 19 bildet, wird die Kolbenstange 12a bei Druck, das heißt bei einer Kraft gegen die Ausschub-Richtung 40, gegen diese in den Arbeitsraum 5 geschoben. Hierbei wird der Ventil-Ring 75 aufgrund der Haft- bzw. Gleitreibung zwischen der Kolbenstange 12a und dem Ventil-Ring 75 gegen die Ausschub-Richtung 40 bewegt und damit vom Ventil-Sitz 74 abgehoben. Hierdurch wird der erste Ring-Spalt 76 zwischen der Kolbenstange 12a und dem Ventil-Sitz 74 und damit der erste Ausgleichskanal 23a freigegeben. Durch die Einschubbewegung der Kolbenstange 12a in das Gehäuse 4 wird das Dämpfungsfluid 10 durch den Durchströmkanal 71 in der Kolbenstange 12a sowie gegebenenfalls durch die Durchströmkanäle 60 im Kolben 13 gedrückt. Die Durchströmkanäle 60 im Kolben 13 bilden hierbei Dämpfungs-Kanäle, über welche sich die Kennlinie des Dämpfers 1a beeinflussen lässt. Bei Bedarf kann auch ein Kolben 13 ohne Durchströmkanäle 60 vorgesehen sein. Durch die Einschubbewegung der Kolbenstange 12a verringert sich das freie Volumen im Arbeitsraum 5. Das hierdurch aus dem Arbeitsraum 5 verdrängte Dämpfungsfluid 10 strömt durch den geöffneten ersten Ausgleichskanal 23a vom ersten Teil-Arbeitsraum 17 in den Ausgleichs-Raum 6.

Bei einer Kraft in Zugrichtung auf die Kolbenstange 12a, das heißt bei einer Bewegung derselben in Ausschub-Richtung 40, wird diese aus dem Arbeitsraum 5 herausgezogen. Hierbei wird der Ventil-Ring 75 aufgrund der Reibung zwischen der Kolbenstange 12a und dem Ventil-Ring 75 in Ausschub-Richtung 40 bewegt und dadurch auf den Ventil-Sitz 74 gedrückt. Hierdurch wird der erste Ring-Spalt 76 zwischen der Kolbenstange 12a und dem Ventil-Körper 73 geschlossen. Der erste Ausgleichskanal 23a wird hierdurch geschlossen. Das Dämpfungsfluid 10 kann in dieser Stellung nicht vom ersten Teil-Arbeitsraum 17 durch den ersten Ausgleichskanal 23a in den Ausgleichsraum 6 strömen. Beim Herausziehen der Kolbenstange 12a aus dem Gehäuse 4 verringert sich das von der Kolbenstange 12a im Arbeitsraum 5 beanspruchte Volumen. Um dieses Differenzvolumen, welches sich beim Herausziehen der Kolbenstange 12a aus dem Gehäuse 4 im Arbeitsraum 5 ergibt, auszugleichen, strömt Dämpfungsfluid 10 durch den zweiten Ausgleichskanal 26 vom Ausgleichsraum 6 in den zweiten Teil-Arbeitsraum 19.

In dieser Stellung ist somit sowohl ein Einschieben der Kolbenstange 12a in das Gehäuse 4 als auch ein Herausziehen derselben aus dem Gehäuse 4 möglich. Die Dämpfungscharakteristik wird hierbei durch den effektiven Strömungs-Querschnitt des Durchströmkanals 71 in der Kolbenstange 12a und die Strömungs-Querschnitte der Ausgleichs-Kanäle 23a, 26 sowie das Ansprech-Verhalten des Ausgleichs-Ventils 31 bzw. des Ringspalt-Ventils 80 gegeben. Gegebenenfalls kann die Dämpfungs-Charakteristik des Dämpfers 1a nach Bedarf durch Durchströmkanäle 60 und Verschluss-Elemente 53, 55 beeinflusst werden.

Bei verschlossenem Durchströmkanal 71 in der Kolbenstange 12a, das heißt wenn das durch den End-Bereich 69 des Kolbenstangen-Kerns 49a gebildete Verstell-Element den Durchströmkanal 71 zur Unterbrechung der Durchström-Verbindung zwischen den Teil-Arbeitsräumen 17, 19 verschließt, ergibt sich folgende Situation: Bei einer Kraft auf die Kolbenstange 12a gegen die Ausschub-Richtung 40 wird die Kolbenstange 12a in den Arbeitsraum 5 geschoben. Hierbei wird der Ventil-Ring 75 aufgrund der Haft-/Gleitreibung zwischen der Kolbenstange 12 und dem Ventil-Ring 75 gegen die Ausschub-Richtung 40 bewegt und somit vom Ventil-Sitz 74 abgehoben. Hierdurch wird der erste Ausgleichskanal 23a geöffnet. Andererseits ist das Ausgleichs-Ventil 31 am zweiten Arbeitsraum-Ende 20 in diesem Falle geschlossen. Das Volumen des zweiten Teil-Arbeitsraums 19 ist somit vollständig abgeschlossen. Ein Einschieben der Kolbenstange 12a in das Gehäuse 4 ist daher nicht möglich. Die Kolbenstange 12a ist somit blockiert. Überschreitet die auf die Kolbenstange 12a wirkende Druckkraft eine bestimmte, vorgegebene Maximalkraft, öffnet das Ausgleichs-Ventil 31 und verhindert dadurch eine Beschädigung des Dämpfers 1a. Gegebenenfalls kann ein zusätzlicher Überlast-Schutz durch Durchströmkanäle 60 und Verschluss-Elemente 53, 55 im Kolben 13 vorgesehen sein.

Bei einer Bewegung der Kolbenstange 12a in Ausschub-Richtung 40 wird der Ventil-Ring 75 auf den Ventil-Sitz 74 gezogen. Hierdurch wird der erste Ausgleichskanal 23a geschlossen. Dämpfungsfluid 10 kann nicht durch den ersten Ringspalt 76 strömen. In diesem Fall hat der erste Teil-Arbeitsraum 17 ein vollständig abgeschlossenes Volumen und verhindert dadurch eine Ausschub-Bewegung der Kolbenstange 12a. Ein Überlast-Schutz kann wiederum durch geeignete Durchströmkanäle 60 mit Verschluss-Elementen 53, 55 im Kolben 13 erreicht werden.

Grundsätzlich ist festzuhalten, dass der Dämpfer 1a genau dann blockiert, wenn mindestens einer der Teil-Arbeitsräume 17, 19 ein vollständig abgeschlossenes Volumen aufweist. Bei geschlossenen oder nicht vorhandenen Durchströmkanälen 60 im Kolben 13 ist dies genau dann der Fall, wenn mindestens zwei der Durchström-Verbindungen 23a, 26 und 71 verschlossen sind. Diesbezüglich ist anzumerken, dass der zweite Ausgleichskanal 26 für eine zuverlässige Funktion des Dämpfers 1a stets ein Durchströmen von Dämpfungsfluid 10 aus dem Ausgleichsraum 6 in den Arbeitraum 5 ermöglichen sollte.

Durch geeignete Kombination von mit Ventil- und/oder Dämpfungs-Elementen im Kolben 13 sowie dem ersten Abschluss-Element 21a und/oder dem zweiten Abschluss-Element 24 lässt sich in Verbindung mit dem durch das Verstell-Element verschließbaren Durchströmkanal 71 in der Kolbenstange 12a ein Dämpfer mit flexibel vorgebbarer Blockierbarkeit und Dämpfungs-Charakteristik herstellen.

## Patentansprüche

1. Dämpfer (1; 1a) mit
a. einem Gehäuse (4), welches
i. einen Arbeitsraum (5) und einen Ausgleichsraum (6) umschließt und
ii. eine Mittel-Längs-Achse (7) aufweist,
b. einem zumindest teilweise in dem Arbeitsraum (5) befindlichen Dämpfungsfluid (10),
c. einer Führungs- und Dichtungs-Einheit (3), welche das Gehäuse (4) an einem ersten Gehäuse-Ende (2) abschließt,
d. einer Kolben-Einrichtung (11) umfassend
i. eine Kolbenstange (12; 12a), welche durch die Führungs- und Dichtungs-Einheit (3) abgedichtet aus dem Gehäuse (4) herausgeführt ist, und
ii. einen an der Kolbenstange (12; 12a) befestigten, in dem Gehäuse (4) entlang der Mittel-Längs-Achse (7) geführten Kolben (13),
wobei
e. der Kolben (13) den Arbeitsraum (5) in einen ersten Teil-Arbeitsraum (17) mit einem ersten Arbeitsraum-Ende (18) und einen zweiten Teil-Arbeitsraum (19) mit einem zweiten Arbeitsraum-Ende (20) unterteilt,
f. am ersten Arbeitsraum-Ende (18) ein erstes Abschluss-Element (21; 21a) angeordnet ist mit einem ersten Ausgleichskanal (23; 23a),
i. welcher eine Durchström-Verbindung zwischen dem ersten Teil-Arbeitsraum (17) und dem Ausgleichsraum (6) bildet,
g. am zweiten Arbeitsraum-Ende (18) ein zweites Abschluss-Element (24) angeordnet ist mit einem zweiten Ausgleichskanal (26),
i. welcher eine Durchström-Verbindung zwischen dem zweiten Teil-Arbeitsraum (19) und dem Ausgleichsraum (6) bildet, und
h. die Kolben-Einrichtung (11) mindestens einen Durchströmkanal (71) aufweist, welcher
i. eine Durchström-Verbindung zwischen den Teil-Arbeitsräumen (17, 19) bildet, und
i. das erste Abschluss-Element (21a) ein Ringspalt-Ventil (80) umfasst, das einen Ventil-Körper (73) umfasst, welcher mittels eines Dichtungsrings (22) abgedichtet in einem inneren Gehäuse (8) des Gehäuses (4) angeordnet ist,
j. zwischen dem Ventil-Körper (73) und der Kolbenstange (12a) ein erster Ringspalt (76) ausgebildet ist, der ein Teil des ersten Ausgleichskanals (23a) ist,
k. der Ventil-Körper (73) eine sich radial zur Mittel-Längs-Achse (7) erstreckende Schulter aufweist, welche einen Ventil-Sitz (74) bildet,
l. das Ringspalt-Ventil (80) einen Ventil-Ring (75) aufweist, wobei der Ventil-Ring (75) reibschlüssig und verschiebbar sowie abgedichtet auf der Kolbenstange (12; 12a) angeordnet ist,
m. der Ventil-Ring (75) in einer Verschluss-Stellung des Ringspalt-Ventils (80) abdichtend am Ventil-Sitz (74) anliegt und den ersten Ringspalt (76) verschließt, **dadurch gekennzeichnet, dass**
n. ein Anschlag-Element (77) in den Ventilkörper (73) eingesetzt ist, das die Verschiebbarkeit des Ventil-Rings (75) in Richtung der Mittel-Längs-Achse (7) relativ zum Ventil-Sitz (74) begrenzt, wobei in dem Anschlag-Element (77) Durchtritts-Öffnungen (79) vorgesehen sind, welche in Richtung der Mittel-Längs-Achse (7) in Verlängerung eines zweiten Ringspalts (78) angeordnet sind,
o. der zweite Ringspalt (78) in radialer Richtung zwischen dem Ventil-Ring (75) und dem Ventil-Körper (73) gebildet ist,
p. der erste Ausgleichskanal (23a) durch den ersten Ringspalt (76), den zweiten Ringspalt (78) und die Durchtritts-Öffnungen (79) gebildet wird,
q. der Ventil-Ring (75) in einer Stellung, in der er von dem Ventil-Sitz (74) angehoben und gegen das Anschlag-Element (77) gedrückt ist, den ersten Ausgleichskanal (23a) freigibt,
r. der mindestens eine Durchströmkanal (71) einen mittels eines Verstell-Elements (69) verstellbaren effektiven Strömungs-Querschnitt aufweist.

2. Dämpfer (1; 1a) gemäß Anspruch 1, **dadurch gekennzeichnet, dass** der mindestens eine Durchströmkanal (71) zumindest teilweise in der Kolbenstange (12; 12a) angeordnet ist.

3. Dämpfer (1; 1a) gemäß einem der vorhergehenden Ansprüche, **dadurch gekennzeichnet, dass** das Verstell-Element (69) zumindest teilweise, insbesondere vollständig in der Kolbenstange (12; 12a) angeordnet ist.

4. Dämpfer (1; 1a) gemäß einem der vorhergehenden Ansprüche, **dadurch gekennzeichnet, dass** der mindestens eine Durchströmkanal (71) zur Unterbrechung der Durchström-Verbindung zwischen den Teil-Arbeitsräumen (17, 19) mittels des Verstell-Elements (69) verschließbar ist.

5. Dämpfer (1; 1a) gemäß einem der vorhergehenden Ansprüche, **dadurch gekennzeichnet, dass** das Verstell-Element (69) durch Verlagerung bezüglich der Mittel-Längs-Achse (7), insbesondere durch Verdrehen oder Verschieben, betätigbar ist.

6. Dämpfer (1; 1a) gemäß einem der vorhergehenden Ansprüche, **dadurch gekennzeichnet, dass** im ersten und/oder zweiten Ausgleichskanal (23, 26; 23a) ein Ventil (31, 80), insbesondere ein selbsttätiges Ventil (31), angeordnet ist.

7. Dämpfer (1a) gemäß einem der vorherigen Ansprüche, **dadurch gekennzeichnet, dass** das Ringspalt-Ventil (80) durch Verschieben der Kolbenstange (12; 12a) in Richtung der Mittel-Längs-Achse (7) betätigbar ist.

8. Dämpfer (1; la) gemäß Anspruch 6, **dadurch gekennzeichnet, dass** sowohl im ersten als auch im zweiten Ausgleichskanal (23a, 26) ein Ventil (31, 80) angeordnet ist, wobei die Ventile (31, 80) derart ausgebildet sind, dass bei einer Bewegung des Kolbens (13) in Richtung der Mittel-Längs-Achse (7) jeweils eines der Ventile (31, 80) öffnet, während das jeweils andere schließt.

9. Dämpfer (1; 1a) gemäß einem der vorhergehenden Ansprüche, **dadurch gekennzeichnet, dass** in mindestens einer der Durchström-Verbindungen (23a, 26, 60) ein Überlast-Schutz-Element (31, 53, 55, 80) vorgesehen ist, welches bei Überschreiten einer vorbestimmten Grenzkraft in Richtung der Mittel-Längs-Achse (7) auf die Kolbenstange (12; 12a) ein Geöffnetsein dieser Durchström-Verbindung (23a, 26) sicherstellt.

10. Dämpfer (1; 1a) gemäß einem der vorhergehenden Ansprüche, **dadurch gekennzeichnet, dass** die Kolbenstange (12; 12a) eine äußere Hülse (48) und einen inneren Kern (49) aufweist, wobei der Kern (49) und die Hülse (48) gegeneinander verlagerbar, insbesondere verdrehbar oder verschiebbar, sind.

## Claims

1. Damper (1; 1a) comprising
a. a housing (4), which
i. encloses a working chamber (5) and a compensating chamber (6) and
ii. has a centre longitudinal axis (7),
b. a damping fluid (10) located at least partially in the working chamber (5),
c. a guide and sealing unit (3), which terminates the housing (4) at a first housing end (2),
d. a piston device (11) comprising
i. a piston rod (12; 12a), which, sealed by the guide and sealing unit (3), is guided out of the housing (4), and
ii. a piston (13) fastened to the piston rod (12; 12a) and guided in the housing (4) along the centre longitudinal axis (7),
wherein
e. the piston (13) divides the working chamber (5) into a first part working chamber (17) with a first working chamber end (18) and a second part working chamber (19) with a second working chamber end (20),
f. arranged at the first working chamber end (18) is a first closing element (21; 21a), with a first compensating channel (23; 23a),
i. which forms a through-flow connection between the first part working chamber (17) and the compensating chamber (6),
g. arranged at the second working chamber end (18) is a second closing element (24), with a second compensating channel (26),
i. which forms a through-flow connection between the second part working chamber (19) and the compensating chamber (6), and
h. the piston device (11) has at least one through-flow channel (71), which
i. forms a through-flow connection between the part working chambers (17, 19), and
i. the first closing element (21a) comprises an annular gap valve (80), which comprises a valve body (73), which is arranged, sealed by means of the sealing ring (22), in an inner housing (8) of the housing (4),
j. a first annular gap (76), which is part of the first compensating channel (23a), is configured between the valve body (73) and the piston rod (12a),
k. the valve body (73) has a shoulder extending radially with respect to the centre longitudinal axis (7) and forming a valve seat (74),
l. the annular gap valve (80) has a valve ring (75), the valve ring (75) being arranged on the piston rod (12; 12a) with frictional engagement and shiftably as well as in a sealed manner,
m. in a closing position of the annular gap valve (80), the valve ring (75) rests in a sealing manner on the valve seat (74) and closes the first annular gap (76),
**characterised in that**
n. a stop element (77) is inserted into the valve body (73), which limits the shiftability of the valve ring (75) in the direction of the centre longitudinal axis (7) relative to the valve seat (74), wherein in the stop element (77) through-openings (79) are provided, which are arranged in the direction of the centre longitudinal axis (7) as an extension of a second annular gap (78),
o. the second annular gap (78) is formed in a radial direction between the valve ring (75) and the valve body (73),
p. the first compensating channel (23a) is formed by the first annular gap (76), the second annular gap (78) and the through-openings (79),
q. the valve ring (75), in a position in which it is lifted from the valve seat (74) and pressed against the stop element (77), releases the first compensating channel (23a),
r. the at least one through-flow channel (71) has an effective flow cross section which is adjustable by means of an adjusting element (69).

2. Damper (1; 1a) according to claim 1, **characterised in that** the at least one through-flow channel (71) is at least partially arranged in the piston rod (12; 12a).

3. Damper (1; 1a) according to any one of the preceding claims, **characterised in that** the adjusting element (69) is arranged at least partially, in particular completely, in the piston rod (12; 12a).

4. Damper (1; 1a) according to any one of the preceding claims, **characterised in that** the at least one through-flow channel (71) is closable to interrupt the through-flow connection between the part working chambers (17, 19) by means of the adjusting element (69).

5. Damper (1; 1a) according to any one of the preceding claims, **characterised in that** the adjusting element (69) is actuatable by means of displacement with respect to the centre longitudinal axis (7), in particular by rotation or shifting.

6. Damper (1; 1a) according to any one of the preceding claims, **characterised in that** a valve (31, 80), in particular an automatic valve (31), is arranged in the first and/or second compensating channel (23, 26; 23a)

7. Damper (1a) according to any one of the preceding claims, **characterised in that** the annular gap valve (80) is actuatable by shifting the piston rod (12; 12a) in the direction of the centre longitudinal axis (7).

8. Damper (1; 1a) according to claim 6, **characterised in that** a valve (31, 80) is arranged both in the first and in the second compensating channel (23a, 26), the valves (31, 80) being configured in such a way that upon a movement of the piston (13) in the direction of the centre longitudinal axis (17), a respective one of the valves (31, 80) opens while the respective other one closes.

9. Damper (1; 1a) according to any one of the preceding claims, **characterised in that** provided in at least one of the through-flow connections (23a, 26, 60) is an overload protection element (31, 53, 55, 80), which, when a predetermined limit force is exceeded in the direction of the centre longitudinal axis (7) on the piston rod (12; 12a), ensures that this through-flow connection (23a, 26) is open.

10. Damper (1; 1a) according to any one of the preceding claims, **characterised in that** the piston rod (12; 12a) has an outer sleeve (48) and an inner core (49), the core (49) and the sleeve (48) being displaceable with respect to one another, in particular rotatable or shiftable.

## Revendications

1. Amortisseur (1 ; 1a) comprenant
a. un boîtier (4) qui renferme
i. un espace de travail (5) et un espace de compensation (6) et qui comporte
ii. un axe longitudinal central (7),
b. un fluide d'amortissement (10) situé au moins partiellement dans l'espace de travail (5),
c. une unité de guidage et d'étanchéité (3) qui ferme le boîtier (4) au niveau d'une première extrémité de boîtier (2),
d. un dispositif à piston (11) comprenant
i. une tige de piston (12 ; 12a) qui sort du boîtier (4) en étant étanchéifiée par l'unité de guidage et d'étanchéité (3), et
ii. un piston (13) fixé à la tige de piston (12 ; 12a) et guidé dans le boîtier (4) le long de l'axe longitudinal central (7),
e. le piston (13) divisant l'espace de travail (5) en un premier espace de travail partiel (17) pourvu d'une première extrémité d'espace de travail (18) et un deuxième espace de travail partiel (19) pourvu d'une deuxième extrémité d'espace de travail (20) ;
f. un premier élément de fermeture (21 ; 21a) étant disposé au niveau de la première extrémité d'espace de travail (18) et comprenant un premier conduit de compensation (23 ; 23a)
i. qui forme une liaison de passage entre le premier espace de travail partiel (17) et l'espace de compensation (6),
g. un deuxième élément de fermeture (24) étant disposé au niveau de la deuxième extrémité de l'espace de travail (18) et comprenant un deuxième conduit de compensation (26)
i. qui forme une liaison de passage entre le deuxième espace de travail partiel (19) et l'espace de compensation (6), et
h. le dispositif à piston (11) comportant au moins un conduit de circulation (71) qui forme
i. une liaison de passage entre les espaces de travail partiels (17, 19) et
i. le premier élément de fermeture (21a) comportant une soupape à espace annulaire (80) qui comprend un corps de soupape (73) qui est disposé dans un boîtier intérieur (8) du boîtier (4) en étant étanchéifié au moyen d'une bague d'étanchéité (22),
j. un premier espace annulaire (76) étant ménagé entre le corps de soupape (73) et la tige de piston (12a), lequel premier espace annulaire fait partie du premier conduit de compensation (23a),
k. le corps de soupape (73) comportant un épaulement qui s'étend radialement à l'axe longitudinal central (7) et qui forme un siège de soupape (74).
l. la soupape à espace annulaire (80) comportant une bague de soupape (75), la bague de soupape (75) étant disposée sur la tige de piston (12 ; 12a) de manière coulissante et étanche en formant une liaison à friction,
m. la bague de soupape (75) venant en appui de manière étanche sur le siège de soupape (74) dans une position fermée de la soupape à espace annulaire (80) et fermant le premier espace annulaire (76),
**caractérisé en ce que**
n. un élément de butée (77) est inséré dans le corps de soupape (73), lequel élément de butée limite la capacité de coulissement de la bague de soupape (75) par rapport au siège de soupape (74) dans la direction de l'axe longitudinal central (7), des ouvertures de passage (79) étant ménagées dans l'élément de butée (77), lesquelles sont disposées dans le prolongement d'un deuxième espace annulaire (78) dans la direction de l'axe longitudinal central (7),
o. le deuxième espace annulaire (78) est formé dans la direction radiale entre la bague de soupape (75) et le corps de soupape (73),
p. le premier conduit de compensation (23a) est formé par le premier espace annulaire (76), le deuxième espace annulaire (78) et les ouvertures de passage (79),
q. la bague de soupape (75) libère le premier conduit de compensation (23a) dans une position dans laquelle elle est soulevée du siège de soupape (74) et pressée contre l'élément de butée (77),
r. l'au moins un conduit de passage (71) a une section transversale d'écoulement efficace qui peut être réglée au moyen d'un élément de réglage (69).

2. Amortisseur (1 ; 1a) selon la revendication 1, **caractérisé en ce que** l'au moins un conduit de passage (71) est ménagé au moins en partie dans la tige de piston (12 ; 12a).

3. Amortisseur (1 ; 1a) selon l'une des revendications précédentes, **caractérisé en ce que** l'élément de réglage (69) est disposé au moins en partie, en particulier complètement, dans la tige de piston (12 ; 12a).

4. Amortisseur (1 ; 1a) selon l'une des revendications précédentes, **caractérisé en ce que** l'au moins un conduit de passage (71) peut être fermé au moyen de l'élément de réglage (69) pour couper la liaison de passage entre les espaces de travail partiels (17, 19).

5. Amortisseur (1 ; 1a) selon l'une des revendications précédentes, **caractérisé en ce que** l'élément de réglage (69) peut être actionné par déplacement, notamment par rotation ou coulissement, par rapport à l'axe longitudinal central (7).

6. Amortisseur (1 ; 1a) selon l'une des revendications précédentes, **caractérisé en ce qu'**une soupape (31, 80), en particulier une soupape automatique (31), est disposée dans le premier et/ou le deuxième conduit de compensation (23, 26 ; 23a).

7. Amortisseur (1a) selon l'une des revendications précédentes, **caractérisé en ce que** la soupape à espace annulaire (80) peut être actionnée par déplacement de la tige de piston (12 ; 12a) dans la direction de l'axe longitudinal central (7).

8. Amortisseur (1 ; 1a) selon la revendication 6, **caractérisé en ce que** une soupape (31, 80) est disposée dans le premier et dans le deuxième conduit de compensation (23a, 26), les soupapes (31, 80) étant conçues de telle sorte que, lorsque le piston (13) se déplace dans la direction de l'axe longitudinal central (7), l'une des soupapes (31, 80) s'ouvre tandis que l'autre se ferme.

9. Amortisseur (1 ; 1a) selon l'une des revendications précédentes, **caractérisé en ce qu'un** élément de protection contre les surcharges (31, 53, 55, 80) est prévu dans au moins une des liaisons de passage (23a, 26, 60), lequel garantit que cette liaison de passage (23a, 26) est ouverte en cas de dépassement d'une force limite prédéterminée exercée sur la tige de piston (12 ; 12a) dans la direction de l'axe longitudinal central (7).

10. Amortisseur (1 ; 1a) selon l'une des revendications précédentes, **caractérisé en ce que** la tige de piston (12 ; 12a) comprend un manchon extérieur (48) et un noyau intérieur (49), le noyau (49) et le manchon (48) pouvant être déplacés l'un par rapport à l'autre, en particulier par rotation ou coulissement.
